# EUROPEAN PATENT SPECIFICATION

(11) **EP 4 223 959 B1**
(45) Date of publication and mention of the grant of the patent: **22.10.2025**
(21) Application number: 23154163.2
(22) Date of filing: 31.01.2023
(51) Int. Cl.: E04H 15/20, F16B 9/00

(54) **CAMPING ACCESSORY**
CAMPINGZUBEHÖR
ACCESSOIRE DE CAMPING

(30) Priority: 02.02.2022 GB 202201325
(43) Date of publication of application: 09.08.2023
(73) Proprietor: Philips, Paul, Worcestershire DY13 8EP (GB); Philips, Susan, Worcestershire DY13 8EP (GB)
(72) Inventor: Philips, Paul, Worcestershire DY13 8EP (GB); Philips, Susan, Worcestershire DY13 8EP (GB)
(74) Representative: Lees, Kate Jane

(56) References cited:
- TW-U- M 282 008
- US-A- 2 826 000
- US-A- 5 282 768

## Description

### Field of the Invention.

The present invention relates generally to a camping accessory according to claim 1, particularly but not exclusively to an accessory for an inflatable air tent or awning for a caravan, campervan or motorhome.

### Background

Touring holidays using a canvas tent, campervan, motorhome or caravan are becoming increasingly popular. It is common to install a porch or larger awning immediately adjacent and/or attached to the van or motorhome to increase the covered living space. Traditionally, these awnings have been erected using conventional poles and guide ropes. Such awnings are available in a wide variety of sizes, designs and dimensions to suit the end user. However, these awnings are time-consuming to erect and the weight of the poles in the van or motorhome when touring may be significant and undesirable.

An alternative type of awning that is now widely available is an inflatable air awning, which uses air to inflate tubes of the awning, often using an electric pump. This type of awning is much quicker and easier to put up and take down than traditional pole awnings allowing the end user more time to spend enjoying their valuable touring holiday. Similarly, canvas tents that were previously formed around a framework of interconnecting poles may now be constructed from a frame of inflatable tubes.

These inflatable temporary structures are extremely convenient for the user. Accessories according to the state of the art for inflatable air tubes are disclosed in US2826000A, TWM282008U and US5282768A.

However, the height of each side of an inflatable air awning or tent is typically dictated by the length of the inflatable tube. In contrast, tents and awnings that are erected with poles may be adjustable in height. This lack of adjustability can cause problems if the awning or tent is installed on uneven ground, which is often the case when camping. Uneven ground is particularly problematic for the satisfactory installation of an inflatable air awning because the awning is attached to the side of the van or motorhome. The air tubes of the awning extending from different levels can result in regions of the awning being over stretched. This can make it difficult to fasten the awning to the van or motorhome and/or may result in damage occurring to the awning if too much force is applied.

Awning manufacturers have tried to address this issue by providing stackable pads that may be inserted beneath an inflatable tube of an awning to adjust its height. For example, circular flat pads with a hook and eye fastener, such as Velcro^{™} may be provided wherein the number of pads stacked on top of each other can be selected dependent upon the height of the inflatable tube required to provide a level awning. However, these are not ideal in that the pads do not provide a firm, secure base to the awning, particular if weather conditions are poor, and furthermore, do not allow for minor incremental adjustments in the height of the tube, the height of each pad dictating the minimum change in height of the tube.

It is an object of the present invention to provide an accessory according to claim 1 for an inflatable air awning or tent that overcomes, or at least alleviates, the abovementioned problems.

### Summary of the Invention.

According to the invention there is provided a camping accessory according to claim 1 for adjusting a height or length of an inflatable air tube of an awning or tent, the accessory comprising a base part and a support member configured to support an end of an inflatable air tube, the position of the support member being selectively adjustable with respect to the base part.

The accessory enables an end of an air tube of an inflatable awning or tent to be placed on the support member and adjusted to a required height by movement of the support member with respect to the base part which is placed on the ground. Once the required height is achieved, the support member is configured to be secured in position with respect to the base part.

Preferably, a locking member is provided to secure the support member at the required height with respect to the base part.

The base part preferably comprises a planar structure, such as a circular plate, that preferably may be secured to the ground. Preferably, the base part substantially corresponds to a footprint of the support member. Optionally, the base part may include a planar extension member outside the footprint of the support member. The base part may have one or multiple holes for receipt of a peg.

According to the invention the support member is in the form of a receptacle, such as a cup-shaped member, for receiving the end of the inflatable air tube.

According to the invention the support member comprises an inner sleeve and the receptacle, the receptacle being formed in a lower portion of the inner sleeve. More preferably, the sleeve comprises a semi-cylindrical tube with the receptacle formed at the base of the tube. The receptacle may comprise a cylinder with a circular base for supporting an air tube. Preferably, the sleeve and receptacle are integrally formed.

The support member comprises both the inner and an outer sleeve, the inner and outer sleeve being slidable with respect to each other. Preferably, the outer sleeve comprises a semi-cylindrical tube for receiving the inner sleeve with the receptacle. The tube may be provided with a semi-circular end cap at its base. In this embodiment, the base of the receptacle may be a semi-circular end cap. According to the invention both the inner and outer sleeves are provided with a longitudinal slot, more preferably a centrally located slot. According to the invention the locking member may fixedly secure the inner sleeve with respect to the outer sleeve. Preferably, the locking member comprises a threaded screw and nut wherein the screw is attached to the inner sleeve and extends through the slots of the inner and outer sleeve to allow the inner sleeve to slide up and down with respect to the outer sleeve and be secured in a desired position by fastening of the nut.

The inner sleeve is preferably provided with gripping means to aid movement of the sleeve with respect to the outer sleeve and/or base. For example, strapping may be provided extending from the inner sleeve.

The support member or outer sleeve may be fixedly mounted with respect to the base part but preferably, the support member or outer sleeve is pivotally mounted with respect to the base part. Preferably, the angle of inclination of the support member or outer sleeve with respect to the base part is selectively adjustable.

In one embodiment, the base part is provided with two opposing legs extending from the planar structure of the base part for receiving opposing sides of the outer sleeve, for example by means of a pivot pin extending through complementary holes provided through the legs and the sides of the outer sleeve.

In an alternative embodiment, the base part is provided with a series of upwardly extending parallel spaced apart protrusions having a series of complementary holes therethrough. The rear of the outer sleeve is also provided with a series of corresponding outwardly extending parallel spaced apart protrusions having a series of complementary holes therethrough. The protrusions of the outer sleeve are receivable within the gaps created between the protrusions of the base part or vice versa. A threaded screw may be received through the aligned holes of the protrusions to provide a pivotable connection. A locking nut enables the position of the outer sleeve with respect to the base part to be fixed in a desired position.

The accessory may be provided with additional means to secure the inflatable air tube within or to the support member, such as a hook and eye type fastener and/or strapping. Preferably, this is provided in the base of the receptacle of the support member.

In an alternative embodiment of the present invention, the support member may be telescopically adjustable with respect to the base part, for example by the provision of one or multiple telescopic legs between the base part and the support member. The support member may also be articulated with respect to the base part to enable the angle of the support member to be adjusted.

A second embodiment provides an inflatable air awning or tent incorporating at least one accessory according to the present invention.

A further aspect of the present invention provides the use of a camping accessory according to the first aspect of the invention for adjusting the length or height of an air tube of an inflatable air awning or tent.

### Brief Description of the Drawings

For a better understanding of the present invention and to show more clearly how it may be carried into effect, reference will now be made by way of example only to the accompanying drawings in which:
Figure 1 is a perspective side view of a camping accessory according to one embodiment of the present invention, shown in a partially raised position;
Figure 2 is a rear view of the camping accessory shown in Figure 1;
Figure 3 a perspective side view of the inner sleeve and support member of the camping accessory shown in Figures 1 and 2;
Figures 4A to 4C are respectively front, side and rear perspective views of the outer sleeve of the camping accessory shown in Figures 1 and 2;
Figure 5 is a perspective view of the base part of the camping accessory shown in Figures 1 and 2;
Figure 6 is a perspective front view of a camping accessory according to another embodiment of the present invention, shown in a fully lowered position;
Figure 7 is a perspective rear view of the camping accessory shown in Figure 6;
Figure 8A is a side perspective view of the inner sleeve and support member of the camping accessory shown in Figures 6 and 7;
Figure 8B is partial plan view from above of the inner sleeve and support member shown in Figure 8A;
Figure 8C is a partial plan view from above of the inner sleeve and support member shown in Figure 8A fitted in an outer sleeve, shown in a fully lowered position;
Figure 9A is a partial perspective view of the rear of the outer sleeve shown in the accessory of Figures 6 and 7, disconnected from the base part;
Figure 9B is a perspective front view of the base part of the accessory shown in Figures 6 and 7;
Figure 10 is perspective front view of the camping accessory shown in Figures 6 and 7, shown in a fully raised position; and
Figure 11 is a perspective side view of the accessory shown in Figure 10, shown in a tilted position.

### Detailed Description

The present invention provides an accessory for an inflatable awning or tent that enables the height of inflatable side tubes of the awning or tent to be quickly and easily adjusted to take account of uneven ground. The accessory is particularly useful for awnings that are attachable to the side of a caravan or motorhome but may also prove useful for inflatable tents erected on uneven ground. In brief, the device comprises a support member for receiving the bottom of an inflatable air tube, the support member being movable between different heights and having fixing means to maintain the support member at a desired height. The angle of the support member may also be adjustable to enhance the positioning of the tube received therein.

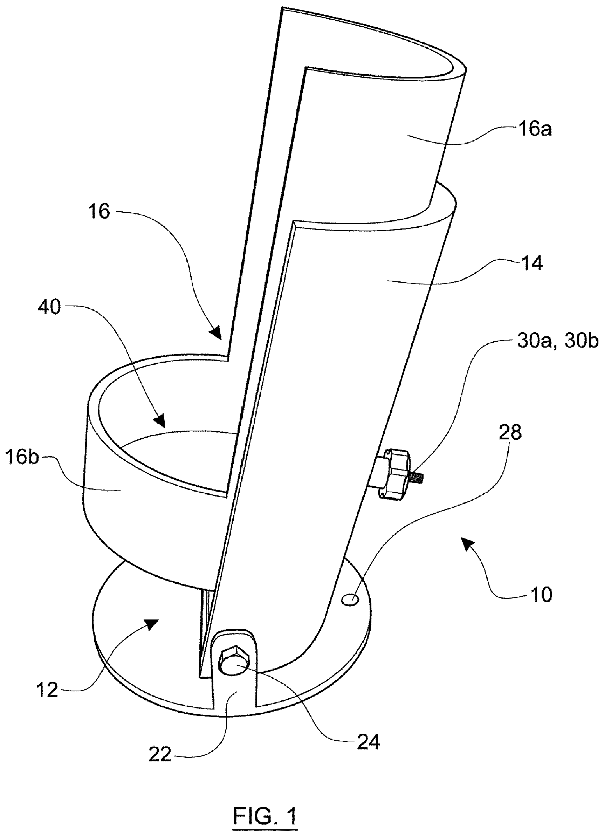

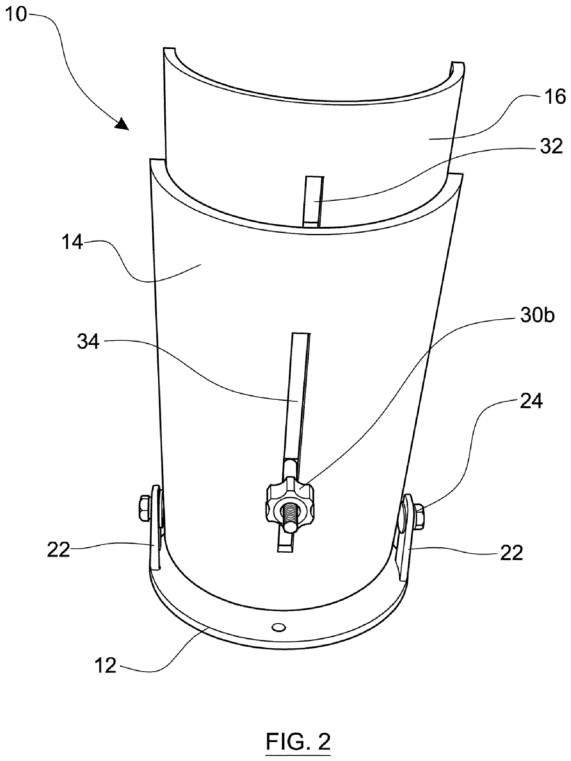

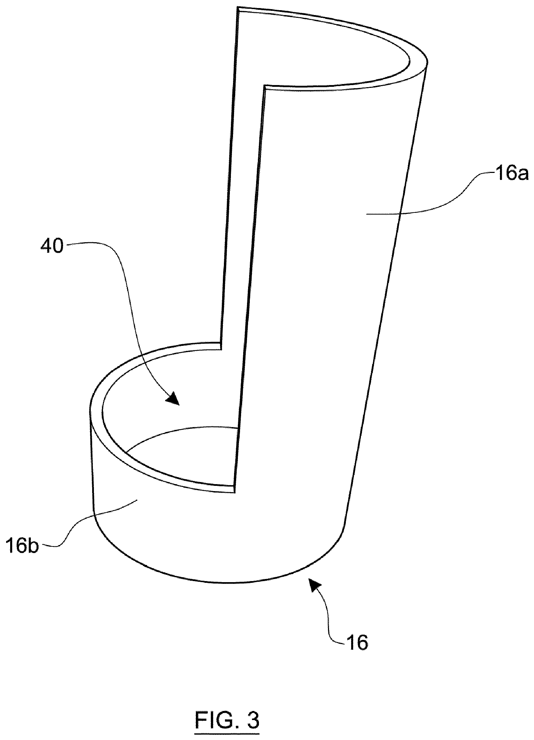

Figures 1 to 5 of the accompanying drawings illustrate one embodiment of a camping accessory 10 according to the present invention. In the illustrated embodiment, the accessory comprises three component parts, a base part 12, an outer sleeve 14 and a support member 16 including inner sleeve 16a and receptacle 16b. The inner sleeve 16a of the support member 16 and the outer sleeve 14 are both in the form of hollow semi-cylinders with the inner sleeve being of slightly smaller dimensions to the outer sleeve so as to enable it to sit within the outer sleeve (see Figures 1 and 2). The receptacle 16b is provided at an intended lower end of the inner sleeve and comprises a circular base and a semi-cylindrical side wall extending from a lower portion of the inner sleeve to provide a circular cavity 40 (see Figure 3).

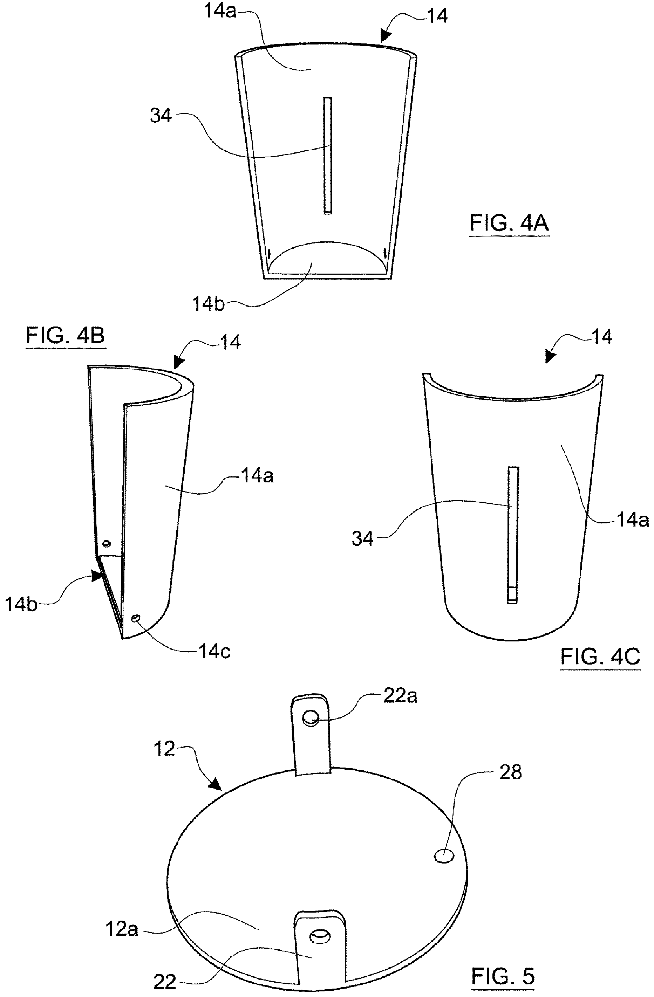

The outer sleeve 14 is substantially the same as the inner sleeve but does not have the receptacle, instead being provided with a semi-circular end cap 14b across the bottom of the sleeve (see Figures 4A and 4B). Additionally, two opposing holes 14c are provided at the bottom of the outer sleeve.

The inner sleeve and the outer sleeve are both provided with a centrally located longitudinal slot 32, 34 which are aligned in the assembled device and a screw with locking nut 30 is provided through the slots. The sleeves 14, 16 are supported on the base part 12 which in the illustrated embodiment comprises a circular plate 12a of a larger diameter than the receptacle 16b (see Figure 2), the plate being provided with two substantially parallel opposing legs 22 each having complementary holes 22a. A further hole 28 is provided through the plate 12a. The outer sleeve 16 is pivotably connected to the base part 12 by fastening means 24 provided through each hole 14c and hole 22a.

The use of an awning accessory 10 as described above to adjust the height of an inflatable awning (or tent) that is erected on uneven ground will now be described. However, it is to be appreciated that alternative embodiments may be provided to enable adjustment of the height of an air tube.

Inflatable air awnings are attached to the side of a caravan, campervan or motorhome by guiding beading or strapping that extends around the upper surface of the deflated awning through a channel extending along an upper surface of a side of the van or motorhome. The side of the awning closest to the van or motorhome is then pegged close to the van and inflatable tubing that extends through a front of the awning (or elsewhere depending upon the size and design of the awning) is then inflated to provide the framework that forms the awning. Pegs are then secured at the base of all sides of the inflated awning and the awning is further tensioned and secured by guide ropes.

These types of awning are extremely convenient to use on level ground but are difficult to tension correctly if the ground is uneven due to it being impossible to adjust the height of the awning because of the fixed length of the inflatable tubing. The accessory of the present invention solves this problem by enabling an end of the inflated tubing to be received within the cavity 40 of the receptacle 16b. The inner sleeve may then be raised by sliding it upwardly with respect to the outer sleeve by means of the slots 32, 34 which raises the inflated tubing received in the receptacle 16b. Once at an acceptable height the position of inner sleeve relative to the outer sleeve is fixed by fastening the nut 30 on the screw extending through the slots 32, 34.

The base part is secured to the ground by providing a peg through the hole 28 in the base plate 12a. Additionally, the angle of the inflated tubing supported in the receptacle may be adjusted by rotation of the outer sleeve with respect of the base part 12 due to the pivot points 24 of the legs 22 of the base part, thereby further allowing improved tensioning of the awning.

It is to be appreciated that multiple devices may be required to provide the desired levelling of the awning, depending upon the number of inflatable tubes. The devices may be sold in pairs as generally at least two may be required to provide optimum levelling of the awning.

Once the awning is no longer required, the accessory 10 may be removed from the base of the tubing and collapsed so that the inner sleeve lies completely within the outer sleeve for storage.

The awning accessory according to the invention is preferably made from a reinforced, lightweight plastics material to provide the required strength, rigidity and durability. The component parts may be formed using 3D printing or by other known methods of construction. In the illustrated embodiment, the receptacle for the tube includes inner sleeve extending upwardly from the receptacle to assist in supporting a portion of the base of the tube to increase stability but it is to be appreciated that this part of the device could just comprise the receptable slidably movable with respect to the outer sleeve.

The device may also be provided with alternative means to adjust the height of the inflated tube with respect to the base part. For example, the outer sleeve may be omitted and at least one telescopic member may be provided to raise and lower the receptacle with respect to the base part.

Optionally, the device may be provided with additional means for securing the tubing within the receptacle. For example, the inner wall and/or base of the receptacle and/or the inner surface of the inner sleeve may be provided with Velcro^{™} and/or adjustable strapping may be provided to fasten around the tubing once it is received within the cavity.

It is to be appreciated that the dimensions of the component parts may be dictated by the diameter of the inflatable tubing to be received within the cavity of the receptacle. Generally, such inflatable tubes are 10-15cm in diameter and thus, it is logical to provide a receptacle that may receive a diameter of tubing up to at least 15cm. Optionally, the device of the present invention may be provided with a series of interchangeable receptacles of different diameters or the diameter of the receptacle may be adjustable.

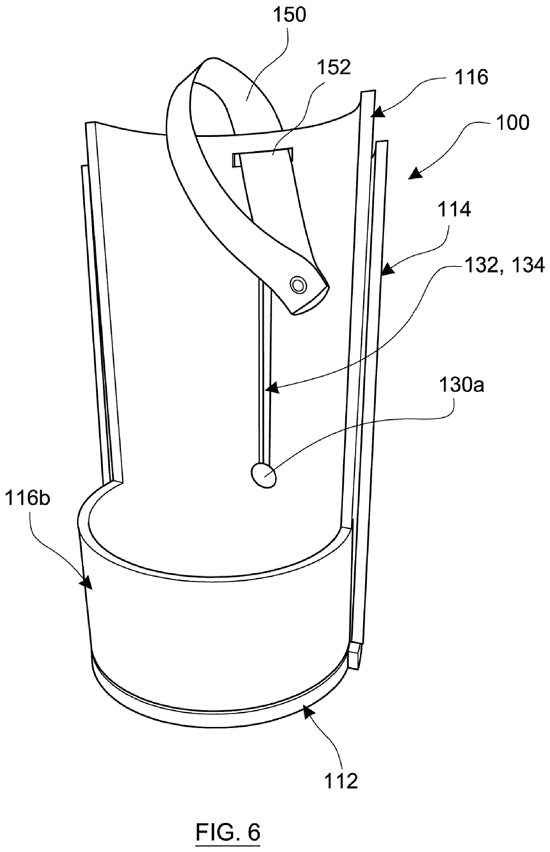

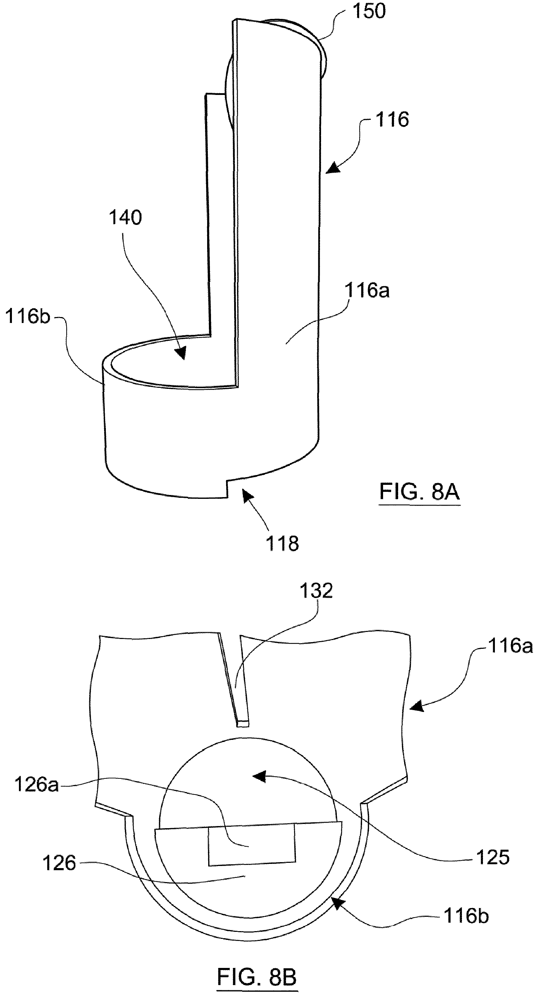

Figures 6 to 11 illustrate another embodiment of a camping accessory 100 according to the present invention. The accessory again comprises three main component parts, a base part 112, an outer sleeve 114 and a support member 116 including inner sleeve 116a and receptacle 116b. The inner sleeve 116a of the support member 16 and the outer sleeve 114 are both in the form of hollow semi-cylinders with the inner sleeve being of slightly smaller dimensions to the outer sleeve so as to enable it to sit within the outer sleeve (see Figure 6). The receptacle 116b is provided at an intended lower end of the inner sleeve and comprises a semi-circular base 126 and a semi-cylindrical side wall 116b extending from a lower portion of the inner sleeve to provide a circular cavity 140 (see Figures 8A and 8B). A fastener material 126a, such as Velcro^{™}, is provided on the semi-circular base. The opposing side of the base 126 is relieved of material to provide a semi-circular hole 125.

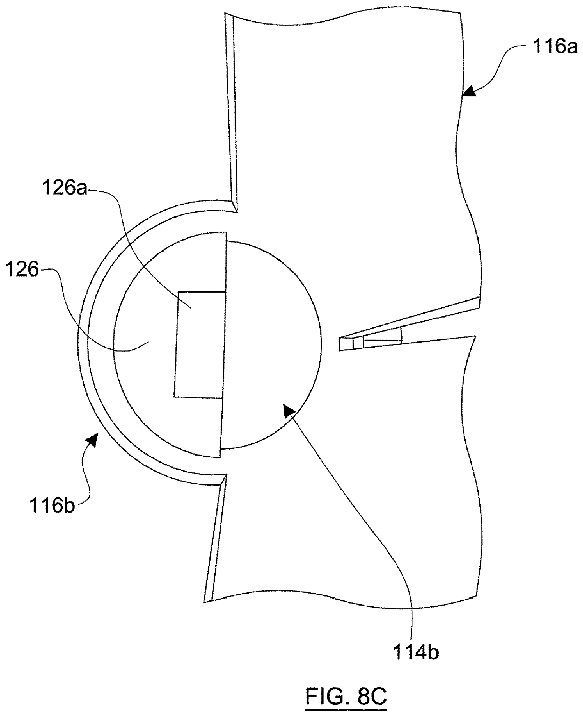

The outer sleeve 14 is substantially the same as the inner sleeve but does not have the receptacle, instead being provided with a semi-circular end cap 114b (see Figure 8C) across the bottom of the sleeve.

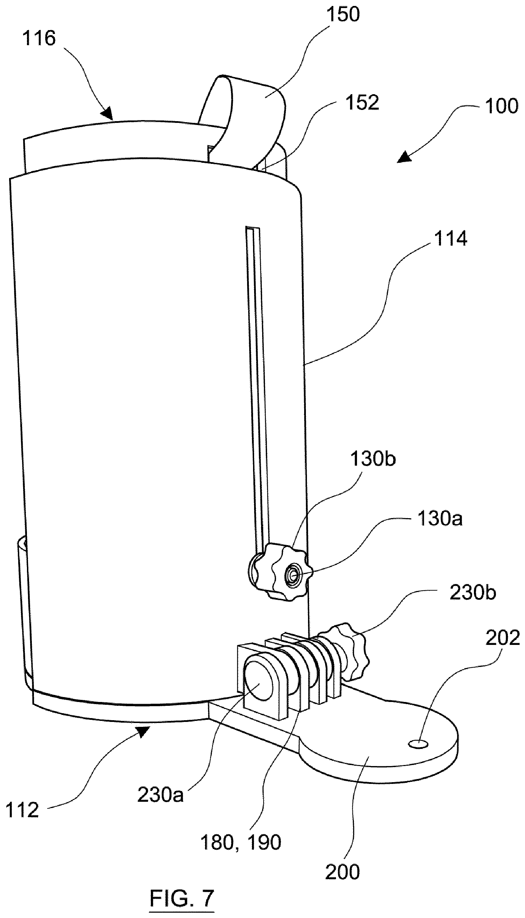

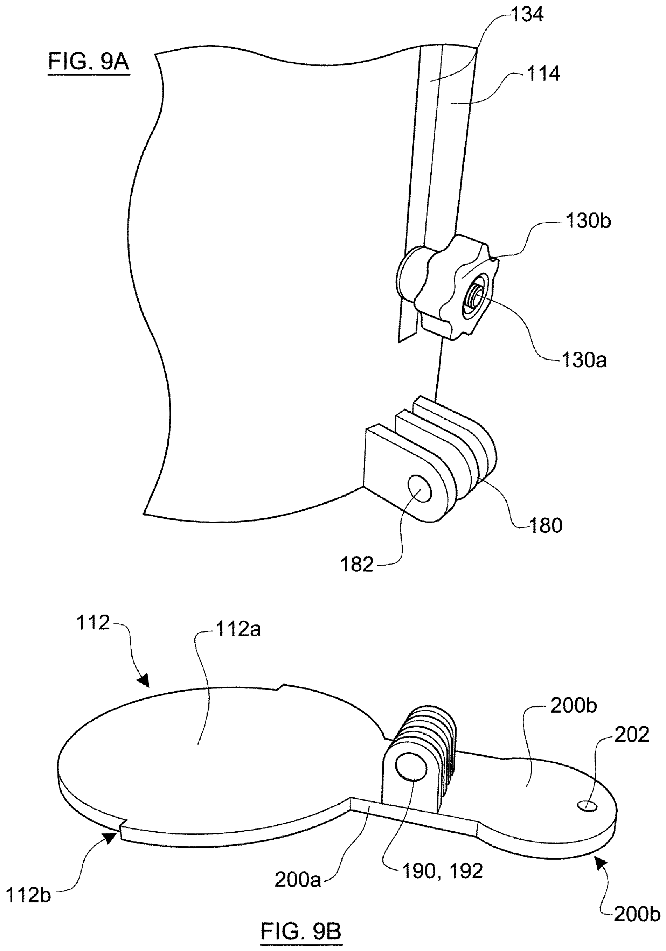

The inner sleeve 116a and the outer sleeve 114 are both provided with a centrally located longitudinal slot 132, 134 which are aligned in the assembled device, see in particular Figures 7 and 9A. A screw 130a traverses the slots 132, 134 from the interior of the inner sleeve to the exterior of the outer sleeve and a locking nut 130b is provided on the end of the screw to the rear of the outer sleeve for securing the position of the inner sleeve with respect to the outer sleeve. A transverse slot 152 is provided at the top of the inner sleeve for receipt of a strap 150 secured therethrough. Additionally, a series of parallel spaced apart protrusions 180 extend substantially perpendicularly from the rear of the outer sleeve below the end of the longitudinal slot 134, each protrusion having a complementary hole to provide a transverse bore 182 extending through the protrusions.

The sleeves 114, 116 are again supported on a base part 112 which is illustrated in further detail in Figures 7 and 9B. The base part comprises a main circular plate 112a of a larger diameter than the receptacle 116b (see Figure 2) and in a preferred embodiment, one half of the circular plate that supports the outer and inner sleeves 114 and 116a has a slightly larger radius than the other semicircle which supports the receptacle 116b of the inner sleeve, forming shelf 112b (see Figure 9B). Additionally, a flat extension member 200 extends from the rear of the circular plate. In the illustrated embodiment, the extension member has a first narrower part 200a with parallel sides terminating in a second circular part 200b. The first part has a series of upwardly extending spaced apart parallel protrusions 190, preferably extending substantially perpendicularly from the base part. Each protrusion has a complementary hole to provide a transverse bore 192 extending through the protrusions. A hole 202 is also provided to the rear of the second circular part 200b.

The outer sleeve 114 and base part are hinged connected to each other by aligning the protrusions 180 of the outer sleeve within the gaps created between the parallel protrusions 190 of the base part. A threaded screw 230a (see Figure 7) is then placed through the transverse bore created by the holes 182 and 192 in the protrusions of the outer sleeve and base part respectively to provide a pivot point between base part and the outer sleeve. A locking nut 230b is provided on an end of the threaded screw. The protrusions 180 of the outer sleeve generally extend substantially at right angle to the protrusions 190 of the base part but are rotatable to alter the angle of the outer sleeve (and inner sleeve connected thereto) due to the pivotal connection provided between the base part and outer sleeve. The locking nut 230b may be tightened to fix the parts at a particular angle.

It is to be appreciated that the flat extension member 200 may be provided in different configurations, such as a substantially rectangular part without a circular rear part. Part or all of the extension member may be hingedly mounted or removable from the base part for storage purposes.

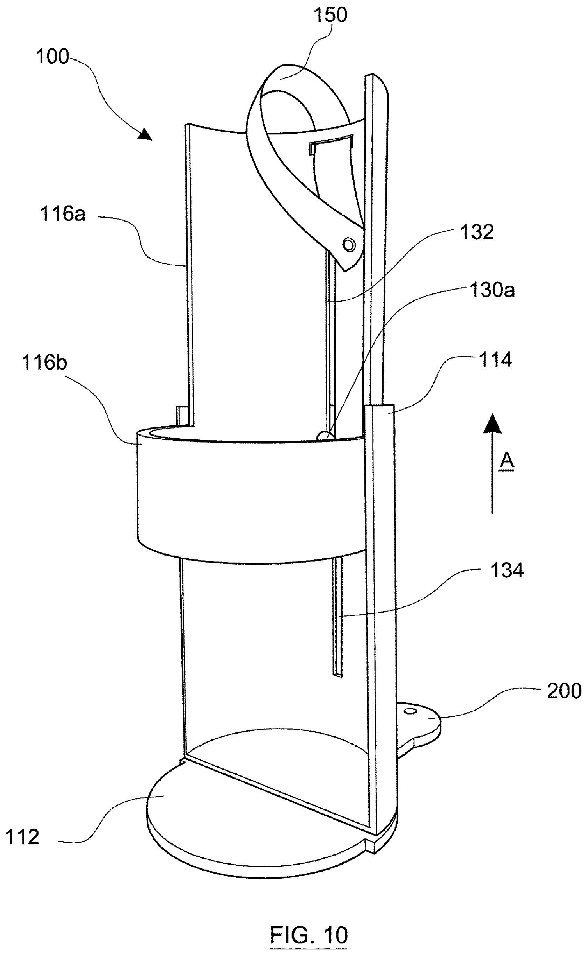

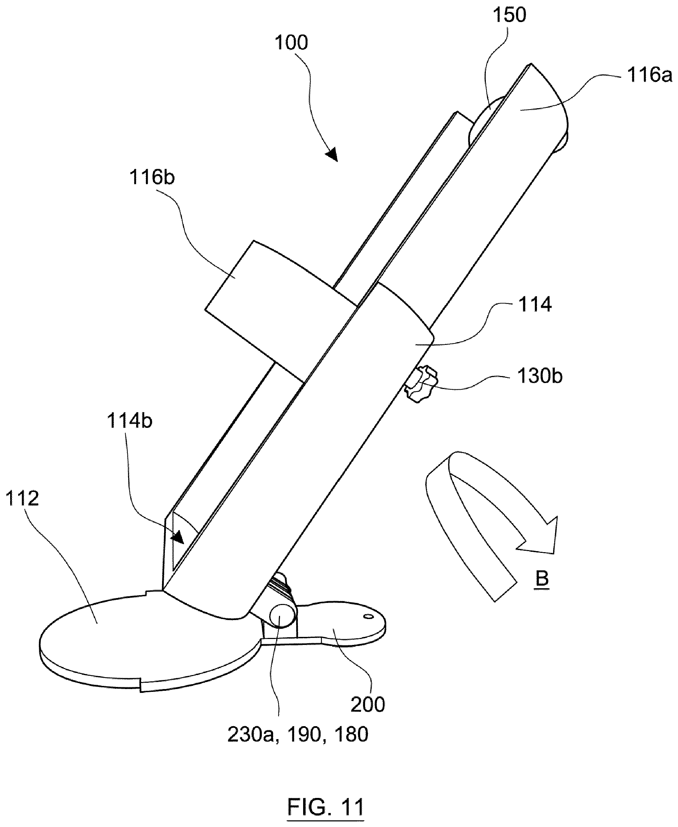

The embodiment of Figures 6 to 11 operates in a similar manner to the accessory shown in Figures 1 to 5 but includes some additional improvements to aid use of the accessory. The base part 112 is secured in the ground by providing a peg through the hole 202 in the flat extension member 200 of the base part. An end of an inflated tubing of an awning or tent is then placed within the cavity 140. The end of the inflated tubing is provided with a complementary fastener to the fastener 126a provided in the base 126 of the inner sleeve thereby securing the tubing within the receptacle 116b. The inner sleeve may then be raised by sliding it upwardly with respect to the outer sleeve by means of the slots 32, 34, thereby raising the inflated tubing received in the receptacle 16b (see arrow A in Figure 10). Raising and lowering of the inner sleeve is simplified by placing a foot on the extension member 200 of the base part and using the strap 152 to pull the inner sleeve upwardly. Once the inflated tubing is at an acceptable height to provide a level awning/tent, the position of inner sleeve relative to the outer sleeve is fixed by tightening the nut 130b on the screw 130a extending through the slots 132, 134 of the inner and outer sleeves. Additionally, the angle of the inflated tubing supported in the receptacle may be adjusted by rotation of the outer sleeve with respect of the base part 12 due to the pivot point provided about the screw 230 passing through the transverse bore of the protrusions of the base part and outer sleeve, thereby further allowing improved tensioning of the awning (see arrow B in Figure 11).

The provision of a semi-circular base 126 in the inner sleeve with a semi-circular hole 125 enables the inner sleeve to be lowered so that the base 126 lies flush with the semi-circular end cap 114b of the outer sleeve, providing a more compact and stable device when in the lowered position (see Figures 6, 7 and 8C).

## Claims

1. A camping accessory (10) for adjusting a height or length of an inflatable air tube of an awning or tent, the accessory comprising a base part (12) and a support member (16) configured to support an end of an inflatable air tube, the position of the support member (16) being selectively adjustable with respect to the base part (12) **characterised in that** the support member (16) comprises a receptacle (16b) for receiving the end of the inflatable air tube, an inner sleeve (16a) and an outer sleeve (14), the inner and outer sleeve (16a, 14) being slidable with respect to each other and having a longitudinal slot (32, 34) wherein a locking member (30) fixedly secures the inner sleeve (16a) with respect to the outer sleeve (14).

2. The accessory as claimed in claim 1, wherein the locking member (30) is provided to secure the support member (16) at the required height with respect to the base part (12).

3. The accessory as claimed in claim 1 or claim 2, wherein the base part (12) substantially corresponds to a footprint of the support member (16).

4. The accessory as claimed in claim 3 wherein the base part (12) includes a planar extension member (200) beyond the footprint of the support member. (16).

5. The accessory as claimed in any one of claims 1 to 4, wherein the base part (12) is securable to the ground.

6. The accessory as claimed in claim 5, wherein the base part (12) has at least one hole for receipt of a peg.

7. The accessory as claimed in any one of the preceding claims, wherein the receptacle (16b) is formed in a lower portion of the inner sleeve (16a).

8. The accessory as claimed in claim 7, wherein the inner sleeve (16a) comprises a semi-cylindrical tube with the receptacle formed at the base of the tube and the receptacle (16b) comprises a cylinder with a circular or semi-circular base.

9. The accessory as claimed in any one of the preceding claims, wherein both the inner and outer sleeves (16a, 14) provided with a centrally located slot (32, 34).

10. The accessory as claimed in any one of the preceding claims, wherein the locking member (30) comprises a threaded screw and nut wherein the screw is attached to the inner sleeve and extends through the slots of the inner and outer sleeve (16a, 14) to allow the inner sleeve (16a) to slide up and down with respect to the outer sleeve (14) and be secured in a desired position by fastening of the nut.

11. The accessory as claimed in any one of the preceding claims wherein the outer sleeve (14) is provided with an end cap (14b).

12. The accessory as claimed in any one of the preceding claims, wherein the outer sleeve (14) is fixedly or pivotally mounted with respect to the base part (12).

13. The accessory as claimed in claim 12, wherein the base part (12) is provided with two upwardly extending opposing legs (22) for pivotally receiving opposing sides of the outer sleeve, optionally including a pivot pin extending through complementary holes provided through each leg and side of the outer sleeve (14).

14. The accessory as claimed in claim 12, wherein the base part (12) and a rear of the outer sleeve (14) are each provided with a series of parallel outwardly extending spaced apart protrusions having a series of complementary holes therethrough wherein the protrusions of the outer sleeve (14) are receivable within the gaps created between the protrusions of the base part or vice versa, and a pin or screw is provided through the aligned holes of the protrusions of the base part (12) and outer sleeve (14) to provide a pivotable connection, optionally including a locking nut (30) at one end of the pin or screw to enable the position of the outer sleeve (14) with respect to the base part to be fixed in a desired position.

15. The accessory as claimed in any one of the preceding claims, further comprising additional means to secure an inflatable air tube within or to the support member (16), preferably wherein the additional securement means are selected from at last one of a hook and eye type fastener and strapping.

## Patentansprüche

1. Campingzubehör (10)
zur Einstellung einer Höhe oder Länge eines aufblasbaren Luftschlauchs eines Vorzelts oder Zelts, wobei das Zubehör ein Grundteil (12) und ein Stützelement (16), das zum Stützen eines Endes eines aufblasbaren Luftschlauchs konfiguriert ist, umfasst, wobei die Position des Stützelements (16) in Bezug auf das Grundteil (12) selektiv einstellbar ist,
**dadurch gekennzeichnet,**
**dass** das Stützelement (16) Folgendes umfasst: eine Aufnahmefassung (16b) zur Aufnahme des Endes des aufblasbaren Luftschlauchs, eine innere Hülse (16a) und eine äußere Hülse (14),
wobei die innere und äußere Hülse (16a, 14) in Bezug aufeinander verschiebbar sind und einen länglichen Schlitz (32, 34) aufweisen,
wobei ein Feststellelement (30) die innere Hülse (16a) in Bezug auf die äußere Hülse (14) fest sichert.

2. Zubehör nach Anspruch 1, wobei das Feststellelement (30) zur Sicherung des Stützelements (16) an der erforderlichen Höhe in Bezug auf das Grundteil (12) bereitgestellt ist.

3. Zubehör nach Anspruch 1 oder Anspruch 2, wobei das Grundteil (12) im Wesentlichen einer Standfläche des Stützelements (16) entspricht.

4. Zubehör nach Anspruch 3, wobei das Grundteil (12) ein planares Verlängerungselement (200) über die Standfläche des Stützelements (16) hinaus einschließt.

5. Zubehör nach einem der Ansprüche 1 bis 4, wobei das Grundteil (12) am Boden gesichert werden kann.

6. Zubehör nach Anspruch 5, wobei das Grundteil (12) mindestens ein Loch zur Aufnahme eines Haltestifts aufweist.

7. Zubehör nach einem der vorstehenden Ansprüche, wobei die Aufnahmefassung (16b) in einem unteren Abschnitt der inneren Hülse (16a) ausgebildet ist.

8. Zubehör nach Anspruch 7, wobei die innere Hülse (16a) ein halbzylindrisches Rohr umfasst, wobei die Aufnahmefassung an dem Boden des Rohrs ausgebildet ist, und die Aufnahmefassung (16b) einen Zylinder mit einem kreisförmigen oder halbkreisförmigen Boden umfasst.

9. Zubehör nach einem der vorstehenden Ansprüche, wobei sowohl die innere als auch äußere Hülse (16a, 14) mit einem mittig gelegenen Schlitz (32, 34) bereitgestellt sind.

10. Zubehör nach einem der vorstehenden Ansprüche, wobei das Feststellelement (30) eine Gewindeschraube und -mutter umfasst, wobei die Schraube an der inneren Hülse angebracht ist und sich durch die Schlitze der inneren und äußeren Hülse (16a, 14) erstreckt, um zu ermöglichen, dass sich die innere Hülse (16a) in Bezug auf die äußere Hülse (14) hoch und runter verschiebt und in einer gewünschten Position durch Befestigung der Mutter gesichert wird.

11. Zubehör nach einem der vorstehenden Ansprüche, wobei die äußere Hülse (14) mit einer Endabdeckung (14b) bereitgestellt ist.

12. Zubehör nach einem der vorstehenden Ansprüche, wobei die äußere Hülse (14) in Bezug auf das Grundteil (12) fest oder gelenkig montiert ist.

13. Zubehör nach Anspruch 12, wobei das Grundteil (12) mit zwei, sich nach oben erstreckenden gegenüberliegenden Schäften (22) zur gelenkigen Aufnahme von gegenüberliegenden Seiten der äußeren Hülse bereitgestellt ist, optional wobei ein Gelenkstift eingeschlossen ist, der sich durch komplementäre Löcher erstreckt, die durch jeden Schaft und an jeder Seite der äußeren Hülse (14) bereitgestellt sind.

14. Zubehör nach Anspruch 12, wobei das Grundteil (12) und eine Hinterseite der äußeren Hülse (14) jeweils mit einer Reihe von parallelen, sich nach außen erstreckenden, beabstandeten Überständen bereitgestellt sind, die eine Reihe von komplementären Löchern dahindurch aufweisen, wobei die Überstände der äußeren Hülse (14) innerhalb der Lücken aufgenommen werden können, die zwischen den Überständen des Grundteils erzeugt werden, oder umgekehrt, und ein Stift oder eine Schraube durch die ausgerichteten Löcher der Überstände des Grundteils (12) und der äußeren Hülse (14) bereitgestellt ist, um eine gelenkige Verbindung bereitzustellen, optional wobei eine Sicherungsmutter (30) an einem Ende des Stifts oder der Schraube eingeschlossen ist, um die Position der äußeren Hülse (14) in Bezug auf das Grundteil, das in einer gewünschten Position zu fixieren ist, zu ermöglichen.

15. Zubehör nach einem der vorstehenden Ansprüche, das weiter zusätzliche Mittel zur Sicherung eines aufblasbaren Luftschlauchs innerhalb oder an dem Stützelement (16) umfasst, bevorzugt wobei die zusätzlichen Sicherungsmittel aus mindestens einem eines Befestigungsmittels vom Haken-Ösen-Typ und einer Verschnürung ausgewählt sind.

## Revendications

1. Accessoire de camping (10) pour régler la hauteur ou la longueur d'un tube pneumatique gonflable d'un auvent ou d'une tente, l'accessoire comprenant une partie de base (12) et un élément de support (16) configuré pour supporter une extrémité d'un tube pneumatique gonflable, la position de l'élément de support (16) étant réglable sélectivement par rapport à la partie de base (12), **caractérisé en ce que** l'élément de support (16) comprend un réceptacle (16b) destiné à recevoir l'extrémité du tube pneumatique gonflable, un manchon intérieur (16a) et un manchon extérieur (14), les manchons intérieur et extérieur (16a, 14) étant coulissants l'un par rapport à l'autre et présentant une fente longitudinale (32, 34) dans lequel un élément de verrouillage (30) fixe solidement le manchon intérieur (16a) par rapport au manchon extérieur (14).

2. Accessoire selon la revendication 1, dans lequel l'élément de verrouillage (30) est fourni pour fixer l'élément de support (16) à la hauteur requise par rapport à la partie de base (12).

3. Accessoire selon la revendication 1 ou la revendication 2. dans lequel la partie de base (12) correspond sensiblement à un encombrement de l'élément de support (16).

4. Accessoire selon la revendication 3, dans lequel la partie de base (12) comporte un élément d'extension plan (200) au-delà de l'encombrement de l'élément de support (16).

5. Accessoire selon l'une quelconque des revendications 1 à 4, dans lequel la partie de base (12) peut être fixée au sol.

6. Accessoire selon la revendication 5, dans lequel la partie de base (12) comporte au moins un orifice pour la réception d'une cheville.

7. Accessoire selon l'une quelconque des revendications précédentes, dans lequel le réceptacle (16b) est formé dans une partie inférieure du manchon intérieur (16a).

8. Accessoire selon la revendication 7, dans lequel le manchon intérieur (16a) comprend un tube semi-cylindrique, le réceptacle étant formé à la base du tube ,et le réceptacle (16b) comprend un cylindre à base circulaire ou semi-circulaire.

9. Accessoire selon l'une quelconque des revendications précédentes, dans lequel les manchons intérieur et extérieur (16a, 14) sont tous deux pourvus d'une fente située centralement (32, 34).

10. Accessoire selon l'une quelconque des revendications précédentes, dans lequel l'élément de verrouillage (90) comprend une vis filetée et un écrou, dans lequel la vis est fixée au manchon intérieur et s'étend à travers les fentes des manchons intérieur et extérieur (16a, 14) pour permettre au manchon intérieur (16a) de coulisser vers le haut et vers le bas par rapport au manchon extérieur (14) et d'être fixé dans une position souhaitée par fixation de l'écrou.

11. Accessoire selon l'une quelconque des revendications précédentes, dans lequel le manchon extérieur (14) est pourvu d'un embout (14b).

12. Accessoire selon l'une quelconque des revendications précédentes, dans lequel le manchon extérieur (14) est monté de manière fixe ou pivotante par rapport à la partie de base (12).

13. Accessoire selon la revendication 12, dans lequel la partie de base (12) est pourvue de deux j ambes opposées (22) s' étendant vers le haut pour recevoir de manière pivotante des côtés opposés du manchon extérieur, comportant éventuellement un pivot s'étendant à travers des trous complémentaires fournis à travers chaque jambe et côté du manchon extérieur (14).

14. Accessoire selon la revendication 12, dans lequel la partie de base (12) et une partie arrière du manchon extérieur (14) sont chacune pourvues d'une série de saillies parallèles espacées s'étendant vers l'extérieur présentant une série de trous complémentaires à travers elles, dans lequel les saillies du manchon extérieur (14) peuvent être reçues à l'intérieur des espaces créés entre les saillies de la partie de base ou vice versa, et une goupille ou une vis est fournie à travers les trous alignés des saillies de la partie de base (12) et du manchon extérieur (14) pour fournir une connexion pivotante. comportant éventuellement un écrou de blocage (30) à une extrémité de la goupille ou de la vis pour permettre de fixer la position du manchon extérieur (14) par rapport à la partie de base (12) dans une position souhaitée.

15. Accessoire selon l'une quelconque des revendications précédentes. comprenant en outre un moyen supplémentaire pour fixer un tube pneumatique gonflable à l'intérieur de l'élément de support (16) ou contre celui-ci, de préférence dans lequel le moyen de fixation supplémentaire est sélectionné parmi au moins l'un d'une fixation à crochet et œillet et d'un cerclage.
